# EUROPEAN PATENT SPECIFICATION

(11) **EP 1 444 027 B1**
(45) Date of publication and mention of the grant of the patent: **02.11.2005**
(21) Application number: 02734996.8
(22) Date of filing: 17.06.2002
(51) Int. Cl.: B01D 36/04, B01D 36/00

(54) **POLLEN CLEANING METHOD AND DEVICE**
METHODE UND VORRICHTUNG ZUR REINIGUNG VON POLLEN
PROCEDE ET DISPOSITIF DE NETTOYAGE DU POLLEN

(30) Priority: 10.10.2001 CZ 20013649
(43) Date of publication of application: 11.08.2004
(73) Proprietor: Tomek, Jiri, 370 05 Ceské Budejovice (CZ)
(72) Inventor: Tomek, Jiri, 370 05 Ceské Budejovice (CZ)
(74) Representative: Sedlák, Jir
(86) International application number: PCT/CZ2002/000035
(87) International publication number: WO 2003/041840

(56) References cited:
- US-A- 4 746 071
- US-A- 4 863 617

## Description

### Background and summary of the invention

This invention concerns the method and the device for cleaning of pollen, which is used as raw material for the manufacture of medicaments.

Pollen, as raw material for the manufacture of medicaments, is gained by gathering those plant parts that contain pollen, especially the blossoms. The gathering must be carried out in the right season, which is different for each plant. The picked blossoms or other plant parts are then dried in storerooms to the required dampness, larger impurities such as leaves, twigs, grass etc. are removed and the raw material is then cleaned by removing small impurities, soot, dust, spores and other pathological ingredients that are undesirable in a medical raw material. The method of pollen cleaning, which has been used until now, is mechanical sieving through sieves.

Pollen cleaning devices known until now use a system of screens with various mesh sizes, which are arranged one above the other, creating a mechanical sifting device. Pollen falls from the highest screen with the coarsest mesh down to the lowest with the finest mesh; impurities are caught on the screens. The disadvantage of such a device is that it is not capable of reliably cleaning the pollen of small impurities, especially spores and microorganisms that have the same or smaller diameter than the pollen particles and fall through the finest screens together with the pollen particles. The resulting biological purity of the pollen thus achieves a maximum of 90 - 95 % pollen particles; the remaining 5 - 10 % are impurities. This known device is also incapable of cleaning heavily contaminated pollen containing more than 30 % impurities. Another disadvantage is a large amount of waste material remaining after cleaning.

The stated shortcomings are completely eliminated by a pollen cleaning method as defined in claim 1 and a pollen cleaning device as defined in claims 2-6. The basis of the invention is that the contaminated pollen is sucked by airflow carrying the pollen to a conical separator part made of insulating material where in pure pollen particles fall through the separator onto a filter while the impurities rotate in electrostatic field of the conical separator part The device comprises a suction unit with a filter. To the filter is led the outlet of a separator with at least one conical part made of insulating material. The device is based on the effect of an electrostatic field generated by spiral airflow carrying the particles of impure pollen around the conical separator part made of insulating material. Because of this electrostatic field, the particles acquire an electric charge and stick to the surface of the conical separator part. Pure pollen particles, which are not electrically conductive, fall through the separator and are caught in the filter. The advantage of a device based on this technological solution is that it enables gaining pollen with a biological purity of 99 - 100 % pollen particles with a minimum amount of waste material remaining after cleaning.

In an advantageous solution, the device is set up in an underpressure chamber equipped with an underpressure ventilator and the outlet of the suction unit is led outside this underpressure chamber. Setting up the device in an underpressure chamber prevents the penetration of any dust particles or other undesirable particles into the device during cleaning and manipulation with cleaned pollen. An advantage regarding the simplicity of construction design is that the suction unit may be comprised of a vacuum cleaner with a textile dust bag. In the textile dust bag is a bag made of filter-paper acting as a filter, into which is inserted a reduction and the separator. The separator is made from insulating material and includes the conical part and a lid. In the area of greatest separator diameter, the outlet of the suction line of a variable diameter is tangentially connected. A larger suction line diameter is used for the cleanest pollen material, small suction line diameters are used for very contaminated pollen.

When cleaning clean or once cleaned pollen, it is useful to insert a circular screen between the conical separator part and the separator lid to separate mechanical particles. When cleaning dry (not oily) pollen, it is useful to set up a conical segment with side openings between the conical separator part and the separator lid. Both the pollen cleaning method and the pollen cleaning device based on this invention are simple and constructionally undemanding but they achieve surprisingly high cleaning effectively in comparison with currently used devices of a similar type. They may be used for cleaning any kind of pollen with a minimum amount of waste material. The device has also minimum energy cortsumption in comparison with sifting devices.

### Brief description of the drawings

The invention will be more closely explained with the help of drawings, depicting pic. 1 - the pollen cleaning device in a schematic cross-section, pic. 2 - view of the separator with circular screen, and pic. 3 - view of the separator with conical segment.

### Detailed description of the preferred embodiments

The pollen cleaning device based on this invention is comprised of the suction unit 1, made of a vacuum cleaner in a vertical position. Inside the textile dust bag 7, which is a standard component of the vacuum cleaner, is inserted the filter 2, made of a filter-paper cylinder. Into this filter is fit the plastic reduction 8, and into its neck is fit the plastic separator 3, comprised of the conical part 16 and lid 9. The reduction 8 and separator 3 may also be joined into one body, but separation into two parts is more practical when washing and cleaning. Into the separator 3 in the area of its greatest diameter is tangentially connected the outlet of the suction line 4 via an interchangeable reduction 17. The suction line is lead from a plastic tube ending with an interchangeable plastic suction attachment 5 for suction of impure pollen 6. By using the interchangeable reduction 17 with various diameters and suction attachments 5 with the same diameter, the underpressure suction of impure pollen 6 into the separator 3 is optimised in dependence on the impurity level of the pollen.

The separator 3 may be equipped with a circular metal shield 13 or the plastic conical segment 14 with side openings 15, arranged between the conical part 16 and lid 9.

The pollen cleaning device is assembled according to pic. 1 in a closed underpressure chamber 10 equipped with an underpressure ventilator 11, and the outlet 12 from the suction unit 1, made of a tube, is led outside the underpressure chamber 10. The pollen cleaning proceeds in the following manner: Impure pollen 6 gathered in nature, cleaned of large objects such as leaves, blossom parts etc. and dried to the required dampness is sucked up through the suction attachment 5, suction line 4 and reduction 17 into the separator 3, where it comes via a tangential course up to the conical part 16. Here, the actual cleaning of the pollen 6 occurs. Pollen is an insulant and thus falls through the bottom opening in the conical part 16 of the separator 3 through the reduction 8 into the filter 2 made of a paper bag, where it is caught. Undesirable particles, dust, spores and micro organisms move around in the electrostatic field generated by friction against the plastic surface of the conical part 16 of the separator 3 and when the suction unit 1 is stopped, they stick to the plastic surface of the conical part 16.

Heavily contaminated pollen 6 is sucked in through the suction attachment 5, the line 4, and a reduction 8 with a small diameter, so that the amount of contaminants does not block the conical part 16 of the separator 3. For clean pollen 6, the suction attachment 5, line 4, and reduction 8 with a large diameter is used. In the case of very pure pollen 6, it is possible to insert it directly into the separator 3 with a spoon.

The pollen cleaning method and the pollen cleaning device are utilisable for cleaning raw pollen material to be used in the manufacture of medicaments.

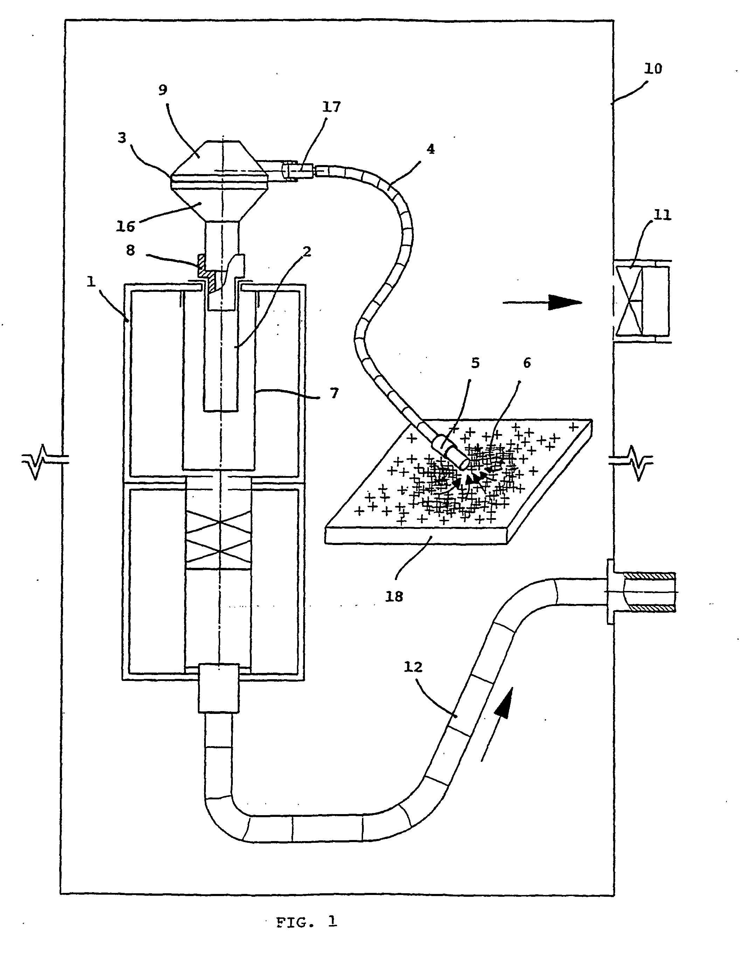

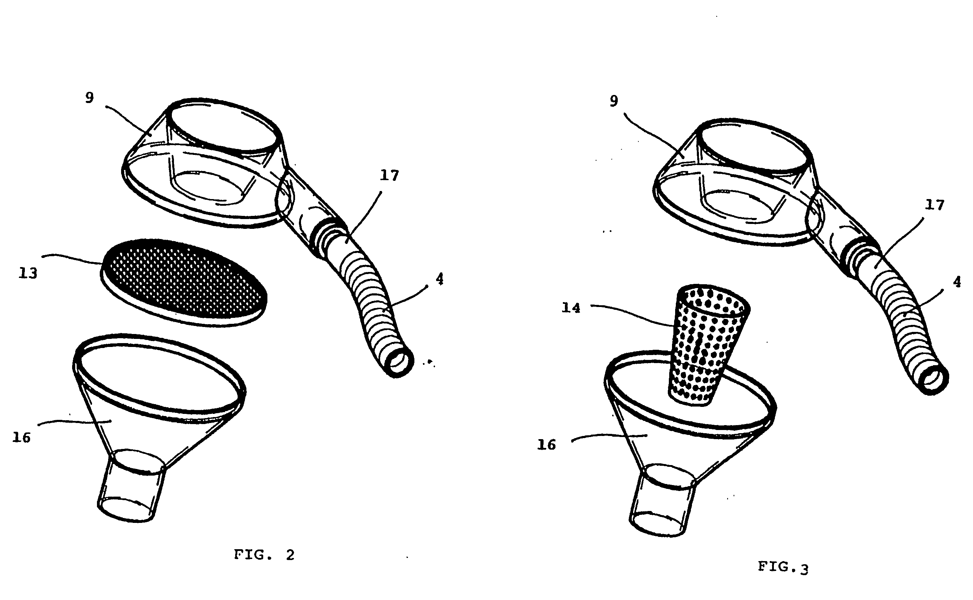

## Claims

1. A pollen cleaning method for removing mechanical impurities, dust and microorganisms from pollen, wherein contaminated pollen (6) is sucked by airflow carrying the pollen and enters tangentially the conical part (16) of a separator (3) made of insulating material whereby pure pollen particles which are electrically not conductive fall through the separator (3) onto a filter (2) while the conductive impurities rotate in the electrostatic field of the conical part (16) of the separator (3) which field is generated by friction of the impurities against the wall of said conical part

2. Pollen cleaning device, **comprising** a suction unit (1) with a filter (2), to which the outlet of a separator (3) with a conical part (16) made of insulating material is connected, a tagential inlet being provided in the separator in the area of its greater diameter.

3. Device according to Claim 2, arranged in an underpressure chamber (10) equipped with an underpressure ventilator (11), with the outlet (12) of the suction unit (1) leading outside the underpressure chamber (10).

4. Device according to Claim 2, wherein the suction unit (1) is made of a vacuum cleaner, in the textile dust bag (7) of which is arranged a filter (2) made of a filter-paper bag, into which suction unit inserted a reduction (8) connecting a plastic separator (3) consisting of a conical part (16) and a lid (9), with the outlet of a suction line (4) of a variable diameter tangentially connected to the separator (3) in the area of its greatest diameter.

5. Device according to Claim 4, wherein a circular screen (13) is inserted between the conical part (16) and the lid (9) of the separator (3).

6. Device according to Claim 4, wherein a conical segment (14) with side openings (15) is inserted between the conical part (16) and the lid (9) of the separator (3).

## Patentansprüche

1. Die Methode zur Reinigung von Pollen von mechanischen Verunreinigungen, Sporen und Mikroorganismen **dadurch gekennzeichnet, dass** verunreinigter Pollen (6) in die Luftströmung angesaugt wird, in der man ihn tangential zu dem kegelförmigen Teil (16) des Abscheiders (3) aus einem Isolierstoff zuleitet, wobei die Partikeln des sauberen Pollens durch den Abscheider (3) in den Filter (2) durchfallen und die Verunreinigungen im elektrostatischen Feld auf dem kegelförmigen Teil (16) des Abscheiders (3) rotieren.

2. Die Vorrichtung zur Pollen-Reinigung, dass sie aus einer Saugeinheit (1) mit einem Filter (2) besteht, zu dem der Auslauf vom Abscheider (3) zugeleitet wird, der mindestens einen kegelförmigen Teil (16) aus Isolierstoff aufweißt.

3. Die Vorrichtung gemäß Anspruch 2, **dadurch gekennzeichnet, dass** sie in einer Unterdruckkammer (10) mit einem Unterdruckventilator (11) angeordnet ist, wobei der Auslauf (12) der Saugeinheit (1) außerhalb die Unterdruckkammer (10) herausgeführt ist.

4. Die Vorrichtung gemäß Anspruch 1, **dadurch gekennzeichnet, dass** die Saugeinheit (1) von einem Absauger gebildet wird, in dem in einem Stoff-Staubbeutel (7) ein Filter (2) aus einem Papierbeutel aus Filtrierpapier angeordnet ist, in welches ein Übergangsstück (8) mit Abscheiders (3) aus Kunststoff eingelegt ist, wobei er aus einem kegelförmigen Teil (16) und einem Deckel (9) besteht, wobei im Bereich dessen größten Durchmessers in den Abscheider (3) die Saugleitung (4) mit variablem Durchmesser tangential mündet.

5. Die Vorrichtung gemäß Anspruch 3, **dadurch gekennzeichnet, dass** zwischen den kegelförmigen Teil (16) und den Deckel (9) des Abscheiders (3) ein kreisförmiges Sieb (13) eingelegt wurde.

6. Die Vorrichtung gemäß Anspruch 3, **dadurch gekennzeichnet, dass** zwischen dem kegelförmigen Teil (16) und dem Deckel (9) des Abscheiders (3) ein kreisförmiges Segment (14) mit Seitenbohrungen (15) angeordnet ist.

## Revendications

1. Le procédé de nettoyage du pollen provenant des souillures mécaniques, des spores et des micro-organismes se distinguant par le fait que le pollen (6) souillé est aspiré dans un courant d'air qui l'emmène tangentiellement dans la partie conique (16) du séparateur (3) d'isolant, compte tenu que les particules de pollen propre tombent du séparateur (3) dans le filtre (2) et que les impuretés se déplacent en mouvement giratoire dans le champ électrostatique de la partie conique (16) du séparateur (3).

2. Le dispositif de nettoyage du pollen se distinguant par le fait qu'il se compose d'une unité d'aspiration (1) et d'un filtre (2) vers lequel est amenée la sortie du séparateur (3) ayant au moins une partie conique (16) de l'isolant.

3. Le dispositif selon l'exigence n° 2 se distinguant par le fait qu'il est inclus dans la chambre de décompression (10) équipée d'un ventilateur de décompression (11), compte tenu que la sortie (12) de l'unité (1) d'aspiration est amenée à l'extérieur de la chambre de décompression (10).

4. Le dispositif selon l'exigence n°1 se distinguant par le fait que l'unité d'aspiration (1) est formée par l'aspirateur contenant un sac en tissu pour les poussières (7) dans lequel se trouve un filtre (2) formé par un petit sac en papier filtre, dans lequel il y a une réduction (8) avec un séparateur (3) conçu en matière plastique et composé d'une partie conique (16) et d'un couvercle (9), compte tenu qu'à l'endroit de son plus fort diamètre se trouve tangentiellement au séparateur (3) l'arrivée d'aspiration (4) du profil changé.

5. Le dispositif selon l'exigence 3 se distinguant par le fait qu'entre la partie conique (16) et le couvercle (9) du séparateur (3) est installé un tamis rond (13).

6. Le dispositif selon l'exigence 3 se distinguant par le fait qu'entre la partie conique (16) et le couvercle (9) du séparateur (3) est installé un segment conique (14) avec des orifices latéraux (15).
